# EUROPÄISCHE PATENTSCHRIFT

(11) **EP 2 203 592 B1**
(45) Veröffentlichungstag und Bekanntmachung des Hinweises auf die Patenterteilung: **31.08.2011**
(21) Anmeldenummer: 08839600.7
(22) Anmeldetag: 13.10.2008
(51) Int. Cl.: D21H 17/14, D21H 21/12, B01D 19/04

(54) **ENTSCHÄUMER FÜR DIE PAPIERINDUSTRIE**
ANTI-FOAMING AGENT FOR THE PAPER INDUSTRY
ANTIMOUSSES POUR L'INDUSTRIE PAPETIÈRE

(30) Priorität: 15.10.2007 EP 07118448
(43) Veröffentlichungstag der Anmeldung: 07.07.2010
(73) Patentinhaber: BASF SE, 67056 Ludwigshafen (DE)
(72) Erfinder: HAMERS, Christoph, 67071 Ludwigshafen (DE); LORENZ, Klaus, 67549 Worms (DE)
(86) Internationale Anmeldenummer: PCT/EP2008/063701
(87) Internationale Veröffentlichungsnummer: WO 2009/050138

(56) Entgegenhaltungen:
- EP-A- 0 149 812
- EP-A- 0 531 713
- EP-A- 0 732 134
- DE-A1- 4 232 415
- US-A- 5 866 041

## Beschreibung

Die Erfindung betrifft Entschäumer für die Papierindustrie auf der Basis von Öl-in-Wasser-Emulsionen bei denen die Ölphase mindestens einen Alkohol mit mindestens 12 C-Atomen, Fettsäureester aus Alkoholen mit mindestens 22 C-Atomen und C₁- bis C₃₆-Carbonsäuren, Destillationsrückstände, die bei der Herstellung von Alkoholen mit einer Kohlenstoffzahl von mindestens 8 durch Oxosynthese oder nach dem Ziegler-Verfahren erhältlich und die gegebenenfalls alkoxyliert sind, Mischungen der genannten Verbindungen und/oder mindestens einen Fettsäureester von C₁₂- bis C₂₂-Carbonsäuren mit ein- bis dreiwertigen C₁- bis C₁₈-Alkoholen und gegebenenfalls mindestens einen Kohlenwasserstoff mit einem Siedepunkt oberhalb von 200 °C oder eine Fettsäure mit 12 bis 22 C-Atomen und 1 bis 80 Gew.-% an Polyglycerinestern enthält, die durch mindestens 20%ige Veresterung von Polyglycerinmischungen aus

| | |
|---|---|
| 0 bis 10 Gew.-% | Monoglycerin, |
| 15 bis 40 Gew.-% | Diglycerin, |
| 30 bis 55 Gew.-% | Triglycerin, |
| 10 bis 25 Gew.-% | Tetraglycerin, |
| 0 bis 15 Gew.-% | Pentaglycerin, |
| 0 bis 10 Gew.-% | Hexaglycerin und |
| 0 bis 5 Gew.-% | höherkondensierten Polyglycerinen |

mit mindestens einer Fettsäure mit 12 bis 36 C-Atomen erhältlich sind.

Aus der US-A 4 950 420 sind Entschäumer für die Papierindustrie bekannt, die 10 bis 90 Gew.-% eines oberflächen aktiven Polyethers wie polyoxalkyliertes Glycerin oder polyalkoxylierten Sorbit und 10 bis 90 Gew.-% eines Fettsäureesters von mehrwertigen Alkoholen, wie Mono- und Diester von Polyethylenglykol oder Polypropylenglykol enthalten. Diese Entschäumer sind frei von irgendwelchen Ölen, Amiden oder hydrophobiertem Siliciumdioxid oder Silikonölen.

Aus der EP-A 0 149 812 sind Entschäumer auf Basis von Öl-in-Wasser-Emulsionen bekannt, bei denen die Ölphase der Emulsion
(a) einen C₁₂- bis C₂₆-Alkohol, Destillationsrückstände, die bei der Herstellung von Alkoholen mit einer höheren Kohlenstoffzahl durch Oxosynthese oder nach dem Ziegler-Verfahren erhalten worden und gegebenenfalls noch alkoxyliert sind und/oder
(b) einen Fettsäureester von C₁₂- bis C₂₂-Carbonsäuren mit einem ein- bis dreiwertigen C₁- bis C₁₈-Alkohol und gegebenenfalls
(c) einen Kohlenwasserstoff mit einem Siedepunkt oberhalb von 200 °C oder Fettsäuren mit 12 bis 22 C-Atomen enthält, eine mittlere Teilchengröße von 0,5 bis 15 µm hat und zu 15 bis 60 Gew.-% am Aufbau der Emulsion beteiligt ist. Die Öl-in-Wasser-Emulsionen enthalten als Stabilisator 0,05 bis 0,5 Gew.-% eines hochmolekularen, wasserlöslichen Homo- oder Copolymerisats von Acrylsäure, Methacrylsäure, Acrylamid oder Methacrylamid.

Aus der JP-A 60/083559 und der JP-A 61/227756 ist die Verwendung von Polyglycerinfettsäureestern als Schaumdämpfer bei der Herstellung von Lebensmitteln wie z.B. Tofu, bekannt. Diese Formulierungen enthalten keine Fettalkohole; die Anwesenheit von Erdalkalisalzen ist jedoch essentiell. Entschäumerformulierungen besitzen bekanntermaßen nur in dem Anwendungsbereich eine gute Wirksamkeit, für den sie entwickelt worden sind, z. B. Textilindustrie, Lebensmittelindustrie, Papierindustrie, Lack- und Lederindustrie. Wegen dieser spezifischen Wirksamkeit ist eine erfolgreiche Übertragung bzw. Anwendung von Entschäumern in anderen Bereichen nicht gegeben.

Bekanntlich verlieren Entschäumer auf Basis von Öl-in-Wasser-Emulsionen, die üblicherweise bei der Herstellung von Papier eingesetzt werden, an Wirksamkeit, wenn die Temperatur des zu entschäumenden wässrigen Systems auf über 35 °C ansteigt. Bei Temperaturen, die oberhalb von 50 °C liegen, tritt dann bei Einsatz der bekannten Öl-in-Wasser-Emulsionen ein noch schnellerer Abfall der Wirksamkeit der Entschäumer ein. Da die Wasserkreisläufe in den Papierfabriken immer häufiger geschlossen werden, resultiert daraus ein Temperaturanstieg des im Kreislauf geführten Wassers bei der Papierherstellung, so dass die Wirksamkeit der bisher verwendeten Entschäumer deutlich absinkt.

Aus der EP-A-0 322 830 sind Entschäumer auf Basis von Öl-in-Wasser-Emulsionen bekannt bei denen die Ölphase der Emulsionen:
(a) einen C₁₂- bis C₂₆-Alkohol, Destillationsrückstände, die bei der Herstellung von Alkoholen mit einer höheren Kohlenstoffzahl durch Oxosynthese oder nach dem Ziegler-Verfahren erhältlich und die gegebenenfalls noch alkoxyliert sind und/oder
(b) einen Fettsäureester von C₁₂- bis C₂₂-Carbonsäuren mit einem ein- bis dreiwertigen C₁-bis C₁₈- Alkohol und gegebenenfalls
(c) einen Kohlenwasserstoff mit einem Siedepunkt oberhalb von 200 °C oder Fettsäuren mit 12 bis 22 C-Atomen enthält,
zu 5 bis 50 Gew.-% am Aufbau der Emulsion beteiligt ist und eine mittlere Teilchengröße von < 25 µm hat und bei der 5 bis 50 Gew.-% der Komponenten (a) und (b) der Ölphase der Öl-in-Wasser-Emulsion durch
(d) mindestens eine, bei einer Temperatur oberhalb von 70 °C schmelzenden Verbindung aus der Gruppe der Fettalkohole mit mindestens 28 C-Atomen, der Ester aus einer C₁- bis C₂₂-Carbonsäure mit einem mindestens 28 C-Atome aufweisenden Alkohol, der Addukte von C₂- bis C₄-Alkylenoxiden an mindestens 28 C-Atome enthaltende Alkohole, der Polyethylenwachse mit einem Molekulargewicht von mindestens 2000 g/mol, der Carnaubawachse, der Montanesterwachse und der Montansäurewachse sowie deren Salze ersetzt sind.

Die Öl-in-Wasser-Emulsionen sind auch bei Temperaturen oberhalb von 35 °C, z.B. in dem Temperaturbereich von 50 bis 60 °C wirksame Entschäumer bei der Herstellung von Papier.

Aus der EP-A 0 531 713 sind Entschäumer auf Basis von Öl-in-Wasser-Emulsionen bekannt, bei denen die Ölphase der Emulsionen zu 5 bis 50 Gew.-% am Aufbau der Emulsion beteiligt ist, und folgende Bestandteile enthält:
(a) einen Alkohol mit mindestens 12 C-Atomen, Fettsäureester aus Alkoholen mit mindestens 22 C-Atomen und C₁- bis C₃₆-Carbonsäuren, Destillationsrückstände, die bei der Herstellung von Alkoholen mit einer höheren Kohlenstoffzahl durch Oxosynthese oder nach dem Ziegler-Verfahren erhältlich und die gegebenenfalls noch alkoxyliert sind, Mischungen der genannten Verbindungen und/oder
(b) einen Fettsäureester von C₁₂- bis C₂₂-Carbonsäuren mit einem ein- bis dreiwertigen C₁- bis C₁₈- Alkohol und gegebenenfalls
(c) einen Kohlenwasserstoff mit einem Siedepunkt oberhalb von 200 °C oder Fettsäuren mit 12 bis 22 C-Atomen in Kombination mit
(d) 1 bis 80 Gew.-% an Polyglycerinestern, die durch mindestens 20 %ige Veresterung von Polyglycerinmischungen aus:

| | |
|---|---|
| 0 bis 10 Gew.-% | Monoglycerin, |
| 15 bis 40 Gew.-% | Diglycerin, |
| 30 bis 55 Gew.-% | Triglycerin, |
| 10 bis 25 Gew.-% | Tetraglycerin, |
| 0 bis 15 Gew.-% | Pentaglycerin, |
| 0 bis 10 Gew.-% | Hexaglycerin und |
| 0 bis 5 Gew.-% | höherkondensierten Polyglycerinen |

mit mindestens einer Fettsäure mit 12 bis 36 C-Atomen erhältlich sind. Diese Entschäumer werden zur Schaumbekämpfung bei der Zellstoffkochung, der Mahlung von Papierstoff, der Papierherstellung und der Dispergierung von Pigmenten für die Papierherstellung in Mengen von 0,02 bis 0,5 Gew.-Teilen pro 100 Gew.-Teile des schaumbildenden Mediums verwendet. In Papierstoffen wirken sie außerdem in den angegebenen Mengen als Entlüfter.

Der vorliegenden Erfindung liegt die Aufgabe zugrunde, für die Papierindustrie weitere Entschäumer zur Verfügung zu stellen, die bei Temperaturen von 40 °C und darüber mindestens so wirksam sind wie die bisher dafür verwendeten Produkte.

Die Aufgabe wird erfindungsgemäß gelöst mit Entschäumern für die Papierindustrie auf der Basis von Öl-in-Wasser-Emulsionen bei denen die Ölphase
(a) mindestens einen Alkohol mit mindestens 12 C-Atomen, Fettsäureester aus Alkoholen mit mindestens 22 C-Atomen und C₁- bis C₃₆-Carbonsäuren, Destillationsrückstände, die bei der Herstellung von Alkoholen mit einer Kohlenstoffzahl von mindestens 8 durch Oxosynthese oder nach dem Ziegler-Verfahren erhältlich und die gegebenenfalls alkoxyliert sind, Mischungen der genannten Verbindungen und/oder
(b) mindestens einen Fettsäureester von C₁₂- bis C₂₂-Carbonsäuren mit ein- bis dreiwertigen C₁- bis C₁₈-Alkoholen und gegebenenfalls
(c) mindestens einen Kohlenwasserstoff mit einem Siedepunkt oberhalb von 200 °C oder eine Fettsäure mit 12 bis 22 C-Atomen und
(d) 1 bis 80 Gew.-% an Polyglycerinestern enthält, die durch mindestens 20%ige Veresterung von Polyglycerinmischungen aus

| | |
|---|---|
| 0 bis 10 Gew.-% | Monoglycerin, |
| 15 bis 40 Gew.-% | Diglycerin, |
| 30 bis 55 Gew.-% | Triglycerin, |
| 10 bis 25 Gew.-% | Tetraglycerin, |
| 0 bis 15 Gew.-% | Pentaglycerin, |
| 0 bis 10 Gew.-% | Hexaglycerin und |
| 0 bis 5 Gew.-% | höherkondensierten Polyglycerinen |

mit mindestens einer Fettsäure mit 12 bis 36 C-Atomen erhältlich sind, wenn die Öl-phase zu mehr als 50 bis 80 Gew.-% am Aufbau der Öl-in-Wasser-Emulsionen beteiligt ist.

Die Ölphase ist beispielsweise zu 51 bis 80 Gew.-%, vorzugsweise zu 55 bis 65 Gew.-% am Aufbau der Öl-in-Wasser-Emulsionen beteiligt.

Diese Entschäumer werden zur Schaumbekämpfung bei der Zellstoffkochung, der Mahlung von Papierstoff, der Papierherstellung und der Dispergierung von Pigmenten für die Papierherstellung in Mengen von 0,02 bis 1,0 Gew.-Teilen pro 100 Gew.-Teilen des schaumbildenden Mediums verwendet. In Papierstoffen wirken sie außerdem in den angegebenen Mengen als Entlüfter.

Als Komponente (a) der Öl-in-Wasser-Emulsionen setzt man vor allem Alkohole mit mindestens 12 C-Atomen oder Mischungen von solchen Alkoholen ein. Es handelt sich hierbei in aller Regel um einwertige Alkohole, die bis zu 48 C-Atome im Molekül enthalten. Solche Produkte sind im Handel erhältlich. Es können jedoch auch solche Fettalkohole als Komponente (a) eingesetzt werden, die eine wesentliche höhere Anzahl von Kohlenstoffatomen im Molekül enthalten. Bei den Alkoholen der Komponente (a) handelt es sich entweder um natürliche oder um synthetische Alkohole. Beispielsweise eignen sich Laurylalkohol, Myristylalkohol, Cetylalkohol, Palmitylalkohol, Stearylalkohol, Behenylalkohol, Oleylalkohol, Ricinolalkohol, Linoleylalkohol und Erucaalkohol.

Als Komponente (a) kann man auch Mischungen von Alkoholen mit unterschiedlicher Anzahl an C-Atomen einsetzen, z.B. Mischungen aus (1) Alkoholen mit 12 bis 26 C-Atomen und (2) Alkoholen mit 28 bis 48 C-Atomen.

Die synthetischen Alkohole der Komponente (a) haben mindestens 8, meistens mindestens 10 C-Atome im Molekül. Sie sind beispielsweise nach dem Ziegler-Verfahren durch Oxidation von Aluminiumalkylen erhältlich. Hierbei handelt es sich um gesättigte, geradkettige, unverzweigte Alkohole. Synthetische Alkohole mit mehr als 8 C-Atomen im Molekül werden auch durch Oxosynthese erhalten. Hierbei fallen in aller Regel Alkoholgemische an. Als Komponente (a) der Ölphase der Entschäumeremulsionen können außerdem Destillationsrückstände verwendet werden, die bei der Herstellung der vorstehend genannten Alkohole durch Oxosynthese oder nach dem Ziegler-Verfahren erhalten werden. Bei den Destillationsrückständen handelt es sich im Wesentlichen um Alkohole mit einem Siedepunkt von mindestens 200 °C bei einem Druck von 20 mbar.

Als Bestandteil (a) der Ölphase der Entschäumer-Emulsionen eignen sich auch alkoxylierte Destillationsrückstände, die bei den oben genannten Verfahren zur Herstellung von höheren Alkoholen durch Oxosynthese oder nach dem Ziegler-Verfahren anfallen. Man erhält die oxalkylierten Destillationsrückstände dadurch, dass man die Destillationsrückstände mit Ethylenoxid oder mit Propylenoxid oder auch mit einer Mischung aus Ethylenoxid und Propylenoxid nach bekannten Verfahren der Alkoxylierung unterwirft. Pro OH-Gruppe des Alkohols im Destillationsrückstand werden bis zu 5 Ethylenoxid- bzw. Propylenoxidgruppen angelagert. Vorzugsweise addiert man pro OH-Gruppe des Alkohols im Destillationsrückstand 1 bis 2 Ethylenoxidgruppen.

Als Komponente (a) eignen sich auch Fettsäureester aus Alkoholen mit mindestens 22 C-Atomen und C₁- bis C₃₆-Carbonsäuren, z.B. Montanwachse oder Carnaubawachse.

Die oben genannten Verbindungen der Komponente (a) können entweder allein oder in Mischung untereinander in beliebigen Verhältnissen als Bestandteil der Komponente (a) die Ölphase der Öl-in-Wasser-Emulsionen bilden.

Als Komponente (b) der Ölphase der Entschäumer-Emulsion verwendet man Fettsäureester von C₁₂- bis C₂₂-Carbonsäuren mit einem ein- bis dreiwertigen C₁- bis C₁₈-Alkohol. Die Fettsäuren, die den Estern zugrunde liegen, sind beispielsweise Laurinsäure, Myristinsäure, Palmitinsäure, Stearinsäure, Arachinsäure und Behensäure. Vorzugsweise verwendet man zur Herstellung der Ester Palmitinsäure oder Stearinsäure. Man kann einwertige C₁- bis C₁₈-Alkohole zur Veresterung der genannten Carbonsäuren verwenden, z.B. Methanol, Ethanol, Propanol, Butanol, Hexanol, Decanol und Stearylalkohol als auch zweiwertige Alkohole, wie Ethylenglykol oder dreiwertige Alkohole wie Glycerin. Die mehrwertigen Alkohole können vollständig oder teilweise verestert sein.

Die Ölphase der Emulsion kann zusätzlich noch eine weitere Klasse wasserunlöslicher Verbindungen enthalten, die im folgenden als Komponente (c) bezeichnet werden. Die Verbindungen der Komponente (c) können bis zu 50 Gew.-%, bezogen auf die Komponenten (a) und (b) am Aufbau der Ölphase der Entschäumeremulsionen beteiligt sein. Sie können entweder einer Mischung aus den Komponenten (a) und (b) oder jeder der unter (a) oder (b) genannten Verbindungen zugesetzt werden. Als Komponente (c) eignen sich z.B. Kohlenwasserstoffe mit einem Siedepunkt bei 1013 mbar von mehr als 200 °C und einem Stockpunkt unter 0 °C oder Fettsäuren mit 12 bis 22 Kohlenstoffatomen. Vorzugsweise eignen sich als Kohlenwasserstoffe Paraffinöle, wie die im Handel üblichen Paraffingemische, die auch als Weißöl bezeichnet werden.

Die Komponenten (a) und (b) können in jedem beliebigen Verhältnis zur Herstellung der Entschäumer-Emulsionen verwendet werden. Jede dieser beiden Komponenten kann entweder allein oder in Mischung mit der anderen in den erfindungsgemäßen Entschäumern enthalten sein. In der Praxis haben sich beispielsweise Mischungen aus (a) und (b) bewährt, die 40 bis 60 Gew.-% der Komponente (a) und 60 bis 40 Gew.-% der Komponente (b) enthalten. Die Ölphase der Öl-in-Wasser-Emulsionen kann gegebenenfalls noch zusätzlich mindestens eine Verbindung (c) enthalten. Wesentlich ist jedoch, dass mindestens eine der oben angegebenen Komponenten (a) oder (b) in Kombination mit mindestens einer Verbindung der nachstehend angegebenen Gruppe (d) die Ölphase der Öl-in-Wasser-Emulsionen bildet.

Die Verbindungen (d) sind in einer Menge von 1 bis 80, vorzugsweise 5 bis 20 Gew.-% am Aufbau der Ölphase der Öl-in-Wasser-Emulsionen beteiligt. Das bedeutet, dass die Ölphase der Entschäurmer-Emulsionen notwendigerweise folgende Kombinationen enthält: (a) und (d), (b) und (d) sowie (a), (b) und (d). Die Verbindungen der Komponente (c) können gegebenenfalls bei allen drei oben aufgeführten Kombinationen der Zusammensetzung der Ölphase in Mengen bis zu 40 Gew.-%, bezogen auf die Ölphase der Öl-in-Wasser-Emulsionen, verwendet werden. Als Komponenten (d) der Ölphase kommen Polyglycerinester in Betracht, die durch mindestens 20 %ige Veresterung von Polyglycerinmischungen aus:

| | |
|---|---|
| 0 bis 10 Gew.-% | Glycerin, |
| 15 bis 40 Gew.-% | Diglycerin, |
| 30 bis 55 Gew.-% | Triglycerin, |
| 10 bis 25 Gew.-% | Tetraglycerin, |
| 0 bis 15 Gew.-% | Pentaglycerin, |
| 0 bis 10 Gew.-% | Hexaglycerin und |
| 0 bis 5 Gew.-% | höherkondensierten Polyglycerinen |

mit mindestens einer Fettsäure mit 12 bis 36 C-Atomen im Molekül erhältlich sind.

Die oben beschriebenen Polyglycerinmischungen werden bevorzugt mit 16 bis 30 C-Atomen enthaltenen Fettsäuren verestert. Der Veresterungsgrad beträgt 20 bis 100, vorzugsweise 60 bis 100 %. Bei den für die Veresterung der Polyglycerinmischungen in Betracht kommenden Fettsäuren kann es sich um gesättigte Fettsäuren als auch um ungesättigte Fettsäuren handeln. Für die Veresterung der Polyglycerinmischungen geeignete Fettsäuren sind beispielsweise Laurinsäure, Myristinsäure, Palmitinsäure, Stearinsäure, Arachinsäure, Behensäure und Montanwachssäure. Für die Veresterung der Polyglycerinmischungen kommen auch ethylenisch ungesättigte Fettsäuren in Betracht, z. B. Oleylsäure, Hexadecensäuren, Elaidinsäure, Eicosensäuren und Docosensäuren wie Erucasäure oder Brassidinsäure sowie mehrfach ungesättigte Säuren wie Octadecendiensäuren und Octatriensäuren wie Linolsäure und Linolensäure sowie Mischungen der genannten gesättigten und ungesättigten Carbonsäuren.

Die Polyglycerinmischungen sind beispielsweise durch alkalisch katalysierte Kondensation von Glycerin bei erhöhten Temperaturen (vgl. z. B. Fette, Seifen, Anstrichmittel, 88. Jahrgang, Nr. 3, Seiten 101 bis 106 (1986) oder gemäß der DE-A 38 42 692) oder durch Umsetzung von Glycerin mit Epichlorhydrin in Gegenwart von sauren Katalysatoren bei erhöhten Temperaturen zugänglich. Die Mischungen sind aber auch dadurch erhältlich, dass man die reinen Polyglycerinkomponenten, z. B. Diglycerin, Triglcerin und Tetraglycerin miteinander mischt. Die zu mindestens 20 % veresterten Polyglycerinmischungen werden durch Verestern der Polyglycerinmischungen mit der gewünschten Fettsäure oder Mischung von Fettsäuren nach bekannten Verfahren hergestellt. Hierbei arbeitet man in der Regel in Gegenwart eines sauren Veresterungskatalysators
wie Schwefelsäure, p-Toluolsulfonsäure, Methansulfonsäure, Zitronensäure, phosphoriger Säure, Phosphorsäure, hypophosphoriger Säure oder basischer Katalysatoren wie Natriummethylat oder Kalium-tert.-butylat.

Die Verbindungen der Komponente (d) sind zu 1 bis 80, vorzugsweise 5 bis 20 Gew.-% in der Ölphase enthalten. Die Ölphase ist erfindungsgemäß zu mehr als 50 bis 80 Gew.-% am Aufbau der Öl-in-Wasser-Emulsionen beteiligt, während der Anteil der wässrigen Phase am Aufbau der Emulsionen weniger als 50 bis 20 Gew.-% beträgt, wobei sich die Gewichtsprozente jeweils zu 100 addieren.

Die Ölphase wird in die wässrige Phase einemulgiert. Hierfür benötigt man z.B. Vorrichtungen, in denen die Komponenten der Emulsion einem starken Schergefälle unterworfen werden, z.B. Dispergatoren. Um besonders stabile Öl-in-Wasser-Emulsionen zu erhalten, führt man die Emulgierung der Ölphase in der wässrigen Phase vorzugsweise in Gegenwart von grenzflächenaktiven Stoffen durch, die einen HLB-Wert von mehr als 6 haben (zur Definition des HLB-Werts vgl. W.C. Griffin, Journal of the Society of Cosmetic Chemists, Band 5, Seiten 249 bis 256 (1954)). Bei den grenzflächenaktiven Stoffen handelt es sich um Öl-in-Wasser-Emulgatoren bzw. um typische Netzmittel. Von den grenzflächenaktiven Stoffen kann man anionische, kationische oder nichtionische Verbindungen verwenden bzw. Mischungen dieser Verbindungen, die miteinander verträglich sind z.B. Mischungen aus anionischen und nichtionischen oder kationischen und nichtionischen Netzmitteln. Stoffe der genannten Art sind beispielsweise Natrium- oder Ammoniumsalze höherer Fettsäuren wie Ammoniumoleat oder Ammoniumstearat, oxalkylierte Alkylphenole wie Nonylphenol oder Isooctylphenol, die im Molverhältnis 1 zu 2 bis 1 zu 50 mit Ethylenoxid umgesetzt sind, oxethylierte ungesättigte Öle, z.B. die Reaktionsprodukte aus einem Mol Rizinusöl und 30 bis 40 Mol Ethylenoxid oder die Umsetzungsprodukte aus einem Mol Spermalkohol mit 60 bis 80 Mol Ethylenoxid. Als Emulgatoren werden auch vorzugsweise sulfierte Oxethylierungsprodukte von Nonylphenol oder Octylphenol eingesetzt, die als Natrium- oder Ammoniumsalz der entsprechenden Schwefelsäurehalbester vorliegen.

100 Gew.-Teile der Öl-in-Wasser-Emulsionen enthalten üblicherweise 0,1 bis 5 Gew.-Teile eines Emulgators oder eines Emulgatorgemisches. Außer den bereits genannten Emulgatoren kann man noch Schutzkolloide wie hochmolekulare Polysaccharide und Seifen oder andere übliche Zusatzstoffe wie Stabilisatoren bei der Herstellung der Öl-in-Wasser-Emulsionen einsetzen. So hat sich beispielsweise ein Zusatz von 0,05 bis 0,5 Gew.-%, bezogen auf die gesamte Emulsion, an hochmolekularen, wasserlöslichen Homo- und Copolymerisaten von Acrylsäure, Methacrylsäure, Acrylamid oder Methacrylamid als Stabilisator bewährt. Die Verwendung solcher Stabilisatoren ist beispielsweise Gegenstand der EP-A 0 149 812. Durch das Einemulgieren der Ölphase in die wässrige Phase erhält man Öl-in-Wasser-Emulsionen, die unmittelbar nach der Herstellung eine Viskosität in dem Bereich von beispielsweise 300 bis 3000 mPa·s aufweisen und die eine mittlere Teilchengröße der Ölphase von unterhalb 25 µm, vorzugsweise in dem Bereich von 0,5 bis 15 µm haben.

Obwohl die Verbindungen der Komponente (d) allein oder in Mischung mit der Komponente (c) praktisch keine Wirksamkeit als Öl-in-Wasser-Emulsionsentschäumer aufweisen, tritt überraschenderweise bei Kombination einer Verbindung der Komponente (d) mit Verbindungen (a) und/oder (b) ein synergistischer Effekt auf, der bei der Kombination (a) mit (d) und (a) mit (b) und (d) am stärksten ausgeprägt ist.

Der Zusatz der Komponente (d) zu der Ölphase von Entschäumern, die die Komponente (a) und/oder (b) und gegebenenfalls noch weitere Bestandteile in emulgierter Form enthalten, verschlechtert die Wirksamkeit der so erhältlichen Entschäumer bei tieferen Temperaturen, z.B. bei Raumtemperatur nicht oder nur geringfügig, erhöht jedoch die Wirksamkeit dieser Entschäumer in wässrigen Systemen, deren Temperatur oberhalb von 40 °C liegt in einem unerwarteten Ausmaß.

Die erfindungsgemäßen Öl-in-Wasser-Emulsionen werden in der Papierindustrie in wässrigen Systemen eingesetzt, bei denen die Entstehung von Schaum bei höheren Temperaturen bekämpft werden muss, z.B. bei der Zellstoffkochung, der Mahlung von Papierstoff, der Papierherstellung bei geschlossenen Wasserkreisläufen von Papiermaschinen und der Dispergierung von Pigmenten für die Papierherstellung. Bezogen auf 100 Gew.-Teile Papierstoff in einem schaumbildenden Medium verwendet man 0,02 bis 1,0, vorzugsweise 0,05 bis 0,3 Gew.- Teile der Öl-in-Wasser-Entschäumer-Emulsion. Die Entschäumer bewirken außerdem beim Zusatz zu einer Papierstoffsuspension eine Entlüftung und werden daher auch als Entlüfter bei der Papierherstellung (Zusatz zum Papierstoff) verwendet. Sie eignen sich außerdem als Entschäumer bei der Papierbeschichtung, wo sie Papierstreichfarben zugesetzt werden. Die Entschäumer können auch in der Nahrungsmittelindustrie, der Stärkeindustrie sowie in Kläranlagen bei der Schaumbekämpfung verwendet werden. Sofern sie dem Papierstoff als Entlüfter zugesetzt werden, betragen die dafür angewendeten Mengen 0,02 bis 0,5 Gew.- Teile pro 100 Gew.-Teile Papierstoff.

Der höhere Gehalt an Öl-Phase bei den erfindungsgemäßen Öl-in-Wasser-Emulsionen gegenüber den aus der EP-A-0 531 713 bekannten Emulsionen führt zu effizienteren Produkten. Diese Produkte haben im Vergleich mit den bekannten Produkten den Vorteil, dass man bei der Anwendung mit geringeren Mengen an Produkt auskommt. Außerdem sind die Transportkosten für die erfindungsgemäßen Öl-in-Wasser-Emulsionen geringer als für die bekannten.

### Beispiele

Die in den Beispielen angegebenen Teile sind Gew.-Teile. Die Prozentangaben beziehen sich auf das Gewicht der Stoffe, falls aus dem Zusammenhang nichts anderes hervorgeht.

Die mittlere Teilchengröße der in Wasser emulgierten Teilchen der Ölphase wurde mit Hilfe eines Coulter-Counters der Firma Beckmann bestimmt.

Der K-Wert von Polymerisaten wurde nach H. Fikentscher, Cellulose-Chemie, Band 13, 58 bis 64 und 71 bis 74 (1932) in wässriger Lösung bei einer Temperatur von 25 °C und einer Konzentration von 0,5 Gew.-% bei pH 7 gemessen.

### Bestimmung des Luftgehalts (DS %):

In einem Behälter aus einem durchsichtigen Kunststoff wurden jeweils 10 I einer schaumentwickelnden Papierstoffsuspension 0,1 % (Holzschliff) 5 Minuten umgepumpt. Die in der Stoffsuspension gebildete Luftmenge wurde dann mit Hilfe eines Luftmessgeräts (z.B. auf Basis von Impedanz-Verfahren wie beim Sonica Gerät der Firma Conrex oder auf Basis von Schallgeschwindigkeitsmessung wie beim Sonatrac der Firma Cidra) erfasst. Zur Beurteilung der Wirksamkeit eines Entschäumers wurde der durchschnittliche Luftgehalt 5 Min nach der Zugabe eines Entlüfters angegeben. Pumpt man die Papierstoffsuspension in Abwesenheit eines Entschäumers 5 Minuten um, so erhält man einen durchschnittlichen Luftgehalt von 6 %. Durch die Zugabe von jeweils 5 mg/l eines wirksamen Entschäumers zu der Papierstoffsuspension wird dieser Wert deutlich reduziert, so dass er ein Maß für die Wirksamkeit eines Entschäumers darstellt.

Prüfung der Entschäumer: Die Temperatur der Papierstoffsuspension betrug je nach Prüfung 30, 40, 50 oder 60 °C, wobei die Temperatur während der 5-minütigen Prüfung auf +/- 1°C konstant gehalten wurde. In dieser Terminologie ist der Entschäumer umso besser wirksam, je kleiner der durchschnittliche Luftgehalt der Papierstoffsuspension ist.

### Beispiel 1

Mit Hilfe eines Dispergators wurde eine Öl-in-Wasser-Emulsion hergestellt, bei der die Ölphase zu 60 Gew.-% am Aufbau der Emulsion beteiligt war und eine mittlere Teilchengröße von 3 bis 10 µm hatte. Die Ölphase bestand aus folgenden Komponenten:
(a) 21 Teilen eines Fettalkoholgemisches von C₁₂- bis C₂₆-Alkoholen
(b) 5 Teile Glycerintriester von C₁₆- bis C₁₈-Fettsäuren
(c) 1 Teil eines Mineralöls (handelsübliches Weißöl) und
(d) 2 Teile eines Polyglycerinesters, der erhältlich ist durch Verestern eines Polyglyceringemisches aus

| | |
|---|---|
| 27 % | Diglycerin, |
| 44 % | Triglycerin, |
| 19 % | Tetraglycerin und |
| 10 % | höher kondensierten Polyglycerinen |

mit einem C₁₂- bis C₂₆-Fettsäuregemisch. Der Veresterungsgrad betrug 60 %.

Die Wasserphase bestand aus:
65 Teilen Wasser,
3 Teilen eines Emulgators, der erhältlich ist durch Anlagerung von 25 Mol Ethylenoxid an 1 Mol Isooctylphenol und Verestern des Anlagerungsproduktes mit Schwefelsäure zum Halbester,
1 Teil eines Copolymerisats aus 70 % Acrylamid und 30 % Acrylsäure vom K-Wert 270 und
0,2 Teilen Natronlauge.

Die Komponenten (a) bis (d) wurden zunächst bis auf eine Temperatur von 110 °C erhitzt und dann in die auf 80 °C erwärmte wässrige Phase unter Dispergieren zugefügt. Die so erhältliche Öl-in-Wasser-Emulsion hatte bei einer Temperatur von 20 °C unmittelbar nach der Herstellung eine Viskosität von 1550 mPa·s. Die Wirksamkeit dieser Entschäumer-Emulsion wurde wie oben beschrieben an einer Papierstoffsuspension getestet. Die Ergebnisse sind in der Tabelle angegeben.

### Vergleichsbeispiel 1a (Vergleich gegen EP-A 0 531 713)

Mit Hilfe eines Dispergators wurde eine Öl-in-Wasser-Emulsion hergestellt, bei der die Ölphase zu 30 Gew.-% am Aufbau der Emulsion beteiligt war und eine mittlere Teilchengröße von 3 bis 10 µm hatte. Die Ölphase bestand aus folgenden Komponenten:
(a) 21 Teilen eines Fettalkoholgemisches von C₁₂- bis C₂₆-Alkoholen
(b) 5 Teile Glycerintriester von C₁₆₋ bis C₁₈-Fettsäuren
(c) 1 Teil eines Mineralöls (handelsübliches Weißöl) und
(d) 2 Teile eines Polyglycerinesters, der erhältlich ist durch Verestern eines Polyglyceringemisches aus:

| | |
|---|---|
| 27 % | Diglycerin, |
| 44 % | Triglycerin, |
| 19 % | Tetraglycerin und |
| 10 % | höher kondensierten Polyglycerinen |

mit einem C₁₂- bis C₂₆-Fettsäuregemisch. Der Veresterungsgrad betrug 60 %.

Die Wasserphase bestand aus:
65 Teilen Wasser,
3 Teilen eines Emulgators, der erhältlich ist durch Anlagerung von 25 Mol Ethylenoxid an 1 Mol Isooctylphenol und Verestern des Anlagerungsproduktes mit Schwefelsäure zum Halbester,
1 Teil eines Copolymerisats aus 70 % Acrylamid und 30 % Acrylsäure vom K-Wert 270 und
0,2 Teilen Natronlauge.

Die Komponenten (a) bis (d) wurden zunächst bis auf eine Temperatur von 110 °C erhitzt und dann in die auf 80 °C erwärmte wässrige Phase unter Dispergieren zugefügt. Die so erhältliche Öl-in-Wasser-Emulsion hatte bei einer Temperatur von 20 °C unmittelbar nach der Herstellung eine Viskosität von 2850 mPa·s. Die Wirksamkeit dieser Entschäumeremulsion wurde wie oben beschrieben an einer Papierstoffsuspension getestet. Die Ergebnisse sind in der Tabelle angegeben.

### Vergleichsbeispiel 1 b

Man stellte eine Öl-in-Wasser-Emulsion nach der im Beispiel 1 a angegebenen Vorschrift mit der Ausnahme her, dass man die Komponente (d) fortließ und den Anteil des Fettalkoholgemisches der Komponente (a) auf 23 Teile erhöhte. Man erhielt eine Emulsion, deren Viskosität unmittelbar nach der Herstellung 340 mPa·s bei 20 °C betrug. Die Wirksamkeit dieser Entschäumeremulsion wurde wie oben beschrieben an einer Papierstoffsuspension getestet. Die Ergebnisse sind in der Tabelle angegeben.

### Vergleichsbeispiel 1 c

Man stellte eine Öl-in-Wasser-Emulsion nach der im Beispiel 1 a angegebenen Vorschrift mit der Ausnahme her, dass man die Komponente (d) fortließ und den Anteil des Fettalkoholgemisches der Komponente (a) auf 23 Teile erhöhte und den Gesamt-Ölanteil bei 30 % einstellte. Man erhielt eine Emulsion, deren Viskosität unmittelbar nach der Herstellung 540 mPa·s bei 20 °C betrug. Die Wirksamkeit dieser Entschäumeremulsion wurde wie oben beschrieben an einer Papierstoffsuspension getestet. Die Ergebnisse sind in der Tabelle angegeben.

### Beispiel 2

Nach der im Beispiel 1 a angegebenen Vorschrift wurde eine Emulsion hergestellt, wobei die wässrige Phase gemäß Beispiel 1 a unverändert blieb und die Ölphase des Entschäumers folgende Zusammensetzung aufwies:
(a) 22,0 Teile eines Fettalkoholgemisches aus C₁₂- bis C₂₆-Alkoholen,
(b) 6,2 Teile eines Glycerintriesters von C₁₆- bis C₁₈-Fettsäuren und
(d) 2 Teile Polyglycerinester, der durch Verestern eines Polyglyceringemisches aus

| | |
|---|---|
| 27 % | Diglycerin, |
| 44 % | Triglycerin, |
| 19 % | Tetraglycerin und |
| 10 % | höher kondensierten Polyglycerinen |

mit einer Montanwachssäure im Verhältnis 1:3 hergestellt wurde. Der Veresterungsgrad betrug 60 %. Die Viskosität dieser Emulsion lag unmittelbar nach der Herstellung bei 1630 mPa·s. Die Prüfung der Emulsion als Entschäumer erfolgte nach der oben beschriebenen Methode und ergab die in der Tabelle angegebenen Werte.

### Vergleichsbeispiel 2 (Vergleich gegen EP-A 0 531 713)

Nach der im Vergleichsbeispiel 1 a angegebenen Vorschrift wurde eine Emulsion hergestellt, wobei die wässrige Phase gemäß Vergleichsbeispiel 1 a unverändert blieb und die Ölphase des Entschäumers folgende Zusammensetzung aufwies:
(a) 22,0 Teile eines Fettalkoholgemisches aus C₁₂- bis C₂₆-Alkoholen
(b) 6,2 Teile eines Glycerintriesters von C₁₆- bis C₁₈-Fettsäuren und
(d) 2 Teile Polyglycerinester, der durch Verestern eines Polyglyceringemisches aus

| | |
|---|---|
| 27 % | Diglycerin, |
| 44 % | Triglycerin, |
| 19 % | Tetraglycerin und |
| 10 % | höher kondensierten Polyglycerinen |

mit einer Montanwachssäure im Verhältnis 1:3 hergestellt wurde. Der Veresterungsgrad betrug 60 %. Die Viskosität dieser Emulsion lag unmittelbar nach der Herstellung bei 2930 mPa·s. Die Prüfung der Emulsion als Entschäumer erfolgte nach der oben beschriebenen Methode und ergab die in der Tabelle angegebenen Werte.

### Beispiel 3

Nach der im Beispiel 2 angegebenen Vorschrift wurde eine Emulsion hergestellt, wobei die wässrige Phase gemäß Beispiel 1 a unverändert blieb und die Ölphase des Entschäumers folgende Zusammensetzung aufwies:
(a) 22,0 Teile eines Fettalkoholgemisches aus C₁₂- bis C₂₆ -Alkoholen
(b) 6,2 Teile eines Glycerintriesters von C₁₆- bis C₁₈-Fettsäuren und
(d) 2 Teile Polyglycerinester, der durch Veresterung eines Polyglyceringemisches aus

| | |
|---|---|
| 27 % | Diglycerin, |
| 44 % | Triglycerin, |
| 19 % | Tetraglycerin und |
| 10 % | höher kondensierten Polyglycerinen |

mit einer C₂₂-Fettsäure im Gewichtsverhältnis 1:2 erhältlich ist und einen Veresterunsgrad von 40 % hatte. Die Viskosität dieser Emulsion lag unmittelbar nach der Herstellung bei 660 mPa·s. Die Emulsion wurde nach der oben beschriebenen Methode als Entschäumer getestet. Die Ergebnisse sind in der Tabelle angegeben.

### Vergleichsbeispiel 3

Nach der im Vergleichsbeispiel 2 angegebenen Vorschrift wurde eine Emulsion hergestellt, wobei die wässrige Phase gemäß Beispiel 1 unverändert blieb und die Ölphase des Entschäumers folgende Zusammensetzung aufwies:
(a) 22,0 Teile eines Fettalkoholgemisches aus C₁₂- bis C₂₆ -Alkoholen
(b) 6,2 Teile eines Glycerintriesters von C₁₆- bis C₁₈-Fettsäuren und
(d) 2 Teile Polyglycerinester, der durch Veresterung eines Polyglyceringemisches aus

| | |
|---|---|
| 27 % | Diglycerin, |
| 44 % | Triglycerin, |
| 19 % | Tetraglycerin und |
| 10 % | höher kondensierten Polyglycerinen |

mit einer C₂₂-Fettsäure im Gewichtsverhältnis 1:2 erhältlich ist und einen Veresterunsgrad von 40 % hatte. Die Viskosität dieser Emulsion lag unmittelbar nach der Herstellung bei 660 mPa·s. Die Emulsion wurde nach der oben beschriebenen Methode als Entschäumer getestet. Die Ergebnisse sind in der Tabelle angegeben.

**Tabelle**

| Öl-in-Wasser-Emulsion gemäß | 30 °C | 50 °C | 60 °C | Viskosität sofort | Viskosität nach 1 Woche |
|---|---|---|---|---|---|
| | DS % | DS % | DS % | m Pa·s | mPa·s |
| Beispiel 1 | 0,3 | 0,15 | 0,3 | 1550 | 2000 |
| Vergleichsbeispiel 1 a | 0,6 | 0,3 | 0,6 | 2850 | 3000 |
| Vergleichsbeispiel 1 b | 0,3 | 0,5 | 0,6 | 340 | 800 |
| Vergleichsbeispiel 1c | 0,5 | 0,9 | 1,2 | 540 | 800 |
| Beispiel 2 | 0,3 | 0,2 | 0,3 | 1630 | 4500 |
| Vergleichsbeispiel 2 | 0,6 | 0,3 | 0,6 | 2930 | 4000 |
| Beispiel 3 | 0,3 | 0,2 | 0,3 | 660 | 1200 |
| Vergleichsbeispiel 3 | 0,5 | 0,4 | 0,7 | 660 | 1500 |

| | | | | | |
|---|---|---|---|---|---|
| DS %: durchschnittlicher Luftgehalt der Stoffsuspension in Prozent, bestimmt nach der oben angegebenen Methode. | | | | | |

## Patentansprüche

1. Entschäumer für die Papierindustrie auf der Basis von Öl-in-Wasser-Emulsionen bei denen die Ölphase
(a) mindestens einen Alkohol mit mindestens 12 C-Atomen, Fettsäureester aus Alkoholen mit mindestens 22 C-Atomen und C₁- bis C₃₆-Carbonsäuren, Destillationsrückstände, die bei der Herstellung von Alkoholen mit einer Kohlenstoffzahl von mindestens 8 durch Oxosynthese oder nach dem Ziegler-Verfahren erhältlich und die gegebenenfalls alkoxyliert sind, Mischungen der genannten Verbindungen und/oder
(b) mindestens einen Fettsäureester von C₁₂- bis Carbonsäuren mit einbis dreiwertigen C₁- bis C₁₈-Alkoholen und gegebenenfalls
(c) mindestens einen Kohlenwasserstoff mit einem Siedepunkt oberhalb von 200 °C oder eine Fettsäure mit 12 bis 22 C-Atomen und
(d) 1 bis 80 Gew.-% an Polyglycerinestern enthält, die durch mindestens 20%ige Veresterung von Polyglycerinmischungen aus
| | |
|---|---|
| 0 bis 10 Gew.-% | Monoglycerin, |
| 15 bis 40 Gew.-% | Diglycerin, |
| 30 bis 55 Gew.-% | Triglycerin, |
| 10 bis 25 Gew.-% | Tetraglycerin, |
| 0 bis 15 Gew.-% | Pentaglycerin, |
| 0 bis 10 Gew.-% | Hexaglycerin und |
| 0 bis 5 Gew.-% | höherkondensierten Polyglycerinen |
mit mindestens einer Fettsäure mit 12 bis 36 C-Atomen erhältlich sind, **dadurch gekennzeichnet, dass** die Ölphase zu mehr als 50 bis 80 Gew.-% am Aufbau der Öl-in-Wasser-Emulsionen beteiligt ist.

2. Verwendung der Entschäumer nach Anspruch 1 zur Schaumbekämpfung bei der Zellstoffkochung, der Mahlung von Papierstoff, der Papierherstellung und der Dispergierung von Pigmenten für die Papierherstellung in Mengen von 0,02 bis 1,0 Gew.-Teilen pro 100 Gew.-Teile des schaumbildenden Mediums.

3. Verwendung der Entschäumer nach Anspruch 1 als Entlüfter in Papierstoffen in Mengen von 0,02 bis 0,5 Gew.-Teilen pro 100 Gew.-Teile der Papierstoffe.

## Claims

1. An antifoam for the paper industry, based on oil-in-water emulsions in which the oil phase comprises
(a) at least one alcohol having at least 12 carbon atoms, fatty acid esters of alcohols having at least 22 carbon atoms and C₁- to C₃₆-carboxylic acids, distillation residues which are obtainable in the preparation of alcohols having a carbon number of at least 8 by oxo synthesis or by the Ziegler process and which optionally are alkoxylated, mixtures of said compounds and/or
(b) at least one fatty acid ester of C₁₂- to C₂₂-carboxylic acids with monohydric to trihydric C₁- to C₁₈-alcohols and, optionally
(c) at least one hydrocarbon having a boiling point above 200°C or a fatty acid having 12 to 22 carbon atoms and
(d) from 1 to 80% by weight of polyglyceryl esters which are obtainable by at least 20% esterification of polyglycerol mixtures comprising
from 0 to 10% by weight of monoglycerol,
from 15 to 40% by weight of diglycerol,
from 30 to 55% by weight of triglycerol,
from 10 to 25% by weight of tetraglycerol,
from 0 to 15% by weight of pentaglycerol,
from 0 to 10% by weight of hexaglycerol and
from 0 to 5% by weight of polyglycerols having a higher degree of condensation
with at least one fatty acid having 12 to 36 carbon atoms, wherein more than 50 to 80% by weight of the oil phase is involved in the production of the oil-in-water emulsions.

2. The use of the antifoam according to claim 1 for controlling foam in pulp digestion, the beating of paper stock, papermaking and the dispersing of pigments for papermaking in amounts of from 0.02 to 1.0 part by weight per 100 parts by weight of the foam-forming medium.

3. The use of the antifoam according to claim 1 as a deaerator in paper stocks in amounts of from 0.02 to 0.5 part by weight per 100 parts by weight of the paper stocks.

## Revendications

1. Antimousses pour l'industrie papetière à base d'émulsions huile dans eau, dans lesquels la phase huile contient
(a) au moins un alcool contenant au moins 12 atomes C, des esters d'acides gras d'alcools contenant au moins 22 atomes C et d'acides carboxyliques en C₁ à C₃₆, des résidus de distillation, qui peuvent être obtenus lors de la fabrication d'alcools contenant un nombre de carbone d'au moins 8 par oxosynthèse ou selon le procédé Ziegler et qui sont éventuellement alcoxylés, des mélanges des composés cités et/ou
(b) au moins un ester d'acide gras d'acides carboxyliques en C₁₂ à C₂₂ avec des alcools mono- à trivalents en C₁ à C₁₈, et éventuellement
(c) au moins un hydrocarbure ayant un point d'ébullition supérieur à 200 °C ou un acide gras contenant 12 à 22 atomes C, et
(d) 1 à 80 % en poids d'esters de polyglycérine, qui peuvent être obtenus par estérification à au moins 20 % de mélanges de polyglycérine constitués par
| | |
|---|---|
| 0 à 10 % en poids | de monoglycérine, |
| 15 à 40 % en poids | de diglycérine, |
| 30 à 55 % en poids | de triglycérine, |
| 10 à 25 % en poids | de tétraglycérine, |
| 0 à 15 % en poids | de pentaglycérine, |
| 0 à 10 % en poids | d'hexaglycérine et |
| 0 à 5 % en poids | de polyglycérines d'un niveau de condensation supérieur, |
avec au moins un acide gras contenant 12 à 36 atomes C, **caractérisés en ce que** la phase huile participe à hauteur de plus de 50 à 80 % en poids à la formation des émulsions huile dans eau.

2. Utilisation des antimousses selon la revendication 1 pour lutter contre la mousse lors de la cuisson de la cellulose, le broyage de la pâte à papier, la fabrication du papier et la dispersion de pigments pour la fabrication de papier en quantités de 0,02 à 1,0 parties en poids pour 100 parties en poids du milieu moussant.

3. Utilisation des antimousses selon la revendication 1 en tant qu'exhausteurs dans des pâtes à papier en quantités de 0,02 à 0,5 parties en poids pour 100 parties en poids des pâtes à papier.
